# EUROPEAN PATENT APPLICATION

(11) **EP 1 838 120 A1**
(43) Date of publication of application: **26.09.2007**
(21) Application number: 06005763.5
(22) Date of filing: 21.03.2006
(51) Int. Cl.: H04Q 7/38, H04L 12/28

(54) **Seamless transmission of data to mobile nodes during fast handovers in a mobile communication system**

(71) Applicant: Matsushita Electric Industrial Co., Ltd., Kadoma-shi Osaka 571-8501 (JP)
(72) Inventor: Gonsa, Osvaldo, 63225 Langen (DE); Hakenberg, Rolf, 63225 Langen (DE); Weniger, Kilian, 63225 Langen (DE)
(74) Representative: Grünecker, Kinkeldey, Stockmair & Schwanhäusser Anwaltssozietät

(57) **Abstract**

The invention relates to a method for transmitting data to a mobile node. A network access entity is connected to several routing entities, forming a routing area. The mobile node is located within a reception area, controlled by a first routing entity. A moving velocity of the mobile node is continuously being calculated and compared to a predetermined threshold. In case the moving velocity is not higher than the threshold, the data is transmitted from the network access entity to the first routing entity and from there to the mobile node. In case the velocity is higher than the threshold, the data is transmitted from the network access entity to each of the routing entities within the routing area and is then further transmitted from the first routing entity to the mobile node.

## Description

### FIELD OF THE INVENTION

The invention relates to a method for transmitting data to a mobile node in a mobile communication system. The invention further relates to a mobile node for communicating with a network via a routing entity. The invention also relates to a routing entity for exchanging data with a mobile node. The invention further relates to a control entity for controlling system resources in a reception area. The invention also relates to a network access entity for routing data into a routing area.

### TECHNICAL BACKGROUND

A new version, IPv6 of the Internet Protocol is currently being designed, though the previous Internet Protocol version 4, IPv4, provides a reliable and secure way to connect computers all over the world. The primary aim of IPv6 is to provide sufficient address space, therefore a 128-bit technology is being implemented for addressing. Furthermore, the design of a new version was seen as an opportunity to overcome some of the other shortfalls of IPv4. For instance, IPv4 was not initially designed with support for mobile users, because mobility was not an issue at the beginning of the Internet. However, in IPv6 mobility was designed into the protocol from the beginning, thereby providing a better support and integration with the underlying mechanisms.

Consequently, Mobile IPv6 includes the protocols and mechanisms used for allowing an IPv6 node to be mobile, namely to move to different networks all over the world, while maintaining upper layer connectivity. The key benefit of Mobile IPv6 is that even though the mobile node (MN) changes locations and addresses, the existing connections through which the mobile node is communicating are maintained. In other words, MIPv6 allows a mobile node to maintain the same address, regardless of its point of attachment to the Internet, in order to maintain existing connections, while remaining reachable at any new location of the Internet.

To accomplish this, connections to mobile nodes are made with a specific home address, that is permanently assigned to the mobile node and through which the mobile node is always reachable. Furthermore, a foreign network dependent address is additionally assigned to the mobile node at each new location. By binding this two different addresses at an entity in the home network, if the mobile node is not in its home network, it is possible to efficiently route data to the mobile node via the binding entity in the home network.

In a usual mobile communication system, the link of the mobile nodes to the Internet may be for example directly or via a wireless connection. In particular, a wireless linking enables a mobile node to change its location at a high speed. Consequently, mobile nodes, which may be located for instance in trains or cars move fast from one reception area to another. Upon entering a new reception area, a handover procedure is usually initiated, by which the mobile node is able to maintain existing connections.

However, this may require a lot of signalling between different entities in the mobile communication system, including messages from the MN to the new and old access routers, which control the reception areas. Furthermore, due to link switching and IP protocol operations, this resulting handover latency may inhibit the mobile node to receive data during a period of handover.

When the MNs moves fast, its signalling and updating in the network side needs to be done very quickly. This may include Binding Updates (BU), and corresponding BU Acknowledgements between the mobile node and a Mobility Anchor Point (MAP), which is connected to a plurality of access routers in an area. Depending on the mechanism used, this update may take longer than the time the MN stays in the area in which it sent the update, hence, this may cause packet losses due to outdated location information.

More specifically, loss-less transmission is not guaranteed due to the time that takes to perform Mobile IP protocol operations. This may include for example sending a Neighbour Solicitation message, receiving a Neighbour Advertisement message, or sending Binding Updates. In other words, if the MN moves out of the overlapping area between the coverage of two contiguous Access Routers, before the BU reaches the MAP, the MN will not receive the BU Ack and the data, hence packet loss will occur.

This packet loss during handover is particularly relevant if the mobile node often changes its link to the Internet.

In light of the above mentioned problems, one object of the invention is to provide a seamless communication of a network access entity with a fast moving mobile node.

A further object of the invention is to provide a lossless handover between routing entities for a fast moving mobile node.

### SUMMARY OF THE INVENTION

The objects are solved by the subject matter of the independent claims. Advantageous embodiments of the invention are subject-matters of the dependent claims.

One aspect of the invention is to provide data, destined to a fast moving mobile node, from a network access entity to all routing entities in a routing area, so that when the mobile node changes the serving routing entity, the data is already available at the new serving routing entity. Thereby, a faster handover between routing entities in one routing area is possible and a seamless communication is provided.

According to one embodiment of the invention, a method for transmitting data to a mobile node in a mobile communication system is provided. A network access entity routes data into a routing area and is connected to at least two routing entities within the routing area. Each of the at least two routing entities provides connectivity to at least one reception area within the routing area. The mobile node enters the routing area and upon entering the routing area, is located within a first reception area, which is controlled by a first routing entity. The mobile node moves with a moving velocity from the first reception area towards a second reception area, which is controlled by a second routing entity. Upon entering the routing area, the mobile node registers to the network access entity. Furthermore, it is determined whether the moving velocity of the mobile node is higher than a predetermined moving velocity threshold. In case the moving velocity is not higher than the predetermined moving velocity threshold, the data is transmitted from the network access entity to the first routing entity and further transmitted from the first routing entity to the mobile node. In case the moving velocity is higher than the predetermined moving velocity threshold, the data is transmitted from the network access entity to each of the routing entities within the routing area and further transmitted from the first routing entity to the mobile node.

According to an embodiment of the invention, the mobile node moves from the first reception area to the second reception area and is consequently located in the second reception area. In case the moving velocity is not higher than the predetermined moving velocity threshold, an network-layer handover is performed between the mobile node and the second routing entity. After the network-layer handover, the data is transmitted from the network access entity to the second routing entity and from the second routing entity to the mobile node. In case the moving velocity is higher than the predetermined moving velocity threshold, a link-layer handover is performed and after the link-layer handover, the data is transmitted from the second routing entity to the mobile node. A possible advantage is that in case, the moving velocity is higher and the data is transmitted from the network access entity to all routing entities in the routing area, when a mobile node changes its routing entity, no network-layer handover is necessary, but only a link-layer handover. Thereby, the handover procedure is shortened.

According to an advantageous embodiment of the invention, the network access entity is notified about the departure of the mobile node from the first reception area. This is advantageous because the network entity is thereby enabled to not send data to the old routing entity, even in case the moving velocity of the mobile node is higher than the threshold. Thereby, system resources may be saved.

According to an advantageous embodiment of the invention, the moving velocity of the mobile node is calculated by the first routing entity or the mobile node. One advantage is that these two entities have direct access to the necessary radio data for calculating the speed of a MN.

In an alternative embodiment, the determination, whether the moving velocity is higher than the predetermined moving velocity threshold is effected by the first routing entity or by the mobile node. This leaves the choice open, by which entity the cross over the threshold is detected.

According to a further advantageous embodiment, a determination notification is transmitted from the mobile node or from the first routing entity to the network access entity, comprising information on the determination whether the moving velocity is higher or not higher than the predetermined moving velocity threshold. The network access entity, probably being connected to large number of routing entities does not have to determine if the speed of the MN trespasses a threshold and is relieved of this task.

According to still another embodiment, the determination notification further includes location information of the mobile node. This may be advantageous because no further signalling would then be necessary for the network access entity to know where the MN is currently being located.

In a further embodiment of the invention the registering of the mobile node to the network access entity comprises an assignment of a multicast address to the mobile node. By assigning a multicast address to the MN it is easily possible to transmit data to a plurality of routing entities.

According to an embodiment, the network access entity is provided with pre-configured address information on the routing entities within the routing area, and a multicast group is formed for the multicast address assigned to the mobile node by utilizing said pre-configured address information on the routing entities within the routing area. It is advantageous to provide the network access entity with said address information on the routing entities, because thereby the network access entity is immediately enabled to form an appropriate multicast group for the mobile node.

According to a further embodiment of the invention, the mobile node leaves the first reception area and upon leaving the first reception area, the first routing entity transmits a notification to the network access entity for excluding the address information of the first routing entity, controlling the first reception area, from the multicast group of the multicast address, assigned to the mobile node. Thereby, system resources may be saved, as the network access entity is enabled to exclude the said old routing entity from the multicasting.

In an advantageous embodiment of the invention, in case the moving velocity is higher, the multicast address assigned for the mobile node is utilized for the transmission of data from the network access entity to the routing entities within the routing area. Utilizing a multicast address for transmitting data to several entities is more efficient than establishing one connection for every entity.

According to an alternate embodiment, in case the moving velocity is higher than the moving velocity threshold, the data is transmitted to the routing entities within the routing area via a connection between the network access entity and each routing entity within the routing area. It is not necessary to choose a multicast address and to configure a corresponding multicast group.

According to a further embodiment, the network access entity is a mobility anchor point and wherein the routing entities are access routers. The implementation in IP communication systems is facilitated thereby.

In another advantageous embodiment at least one control entity is connected to the each routing entity. Each control entity controls system resources in a reception area within the routing area. The data is transmitted from the first routing entity to a first control entity and from the first control entity to the mobile node via unicast.

According to an advantageous embodiment, the data is transmitted from the first control entity to the mobile node on a wireless connection via unicast. By utilizing unicast on the wireless link no radio resources are unnecessarily wasted.

In a further embodiment, upon entering the routing area, a permanent address is assigned to the mobile node. The assignment of the multicast address to the mobile node, is effected by assigning the multicast address to the permanent address of the mobile node. Thereby a direct and efficient mapping between these two addresses is performed.

In an alternative embodiment of the invention upon entering the routing area, the network access entity is notified by the mobile node about a permanent address of the mobile node. The assignment of the multicast address to the mobile node, is effected by assigning the multicast address to the permanent address of the mobile node. The permanent address of the mobile node is transmitted from the MN, thereby allowing an unchangeable address for the MN independent of the location.

According to an advantageous embodiment, upon registering the mobile node to the network access entity, the routing entities within the routing area are notified about the assignment of the multicast address to the permanent address of the mobile node. One advantage may be that the mapping of incoming data is thereby facilitated.

According to a further embodiment of the invention, the moving velocity of the mobile node is calculated by utilizing a dwell time of the mobile node in a reception area and a size of the reception area. This is an efficient and reliable approach to compute the speed of a MN.

In a further embodiment the routing area is a first routing area of a plurality of routing areas and the network access entity routes data into the plurality of routing areas. The registration of the mobile node to the network access entity registers the mobile node solely for the first routing area. Thereby, the area can be limited and when transmitting data to all routing entities in the routing area, system resources may be saved.

According to the invention, a mobile node for communicating with a network via a routing entity is provided. The routing entity is connected to a network access entity, that routes data into a routing area. The routing entity provides connectivity to a first reception area within the routing area and the mobile node is located within the first reception area. Furthermore, the mobile node moves with a moving velocity from the first reception area towards a second reception area. A processor is adapted to calculate the moving velocity of the mobile node, and is further adapted to generate a velocity notification message for the routing entity, including information on the calculated moving velocity of the mobile node. A transmitter is adapted to transmit the velocity notification message to the routing entity.

According to the invention, a routing entity for exchanging data with a mobile node in a routing area is provided. The routing entity is connected to a network access entity, that routes data into the routing area. The routing entity provides connectivity to a first reception area within the routing area and the mobile node is located within the first reception area. Furthermore, the mobile node moves with a moving velocity from the first reception area towards a second reception area. A receiver is adapted to receive a velocity notification message from the mobile node, the velocity notification message including information on the moving velocity of the mobile node. A processor is adapted to determine whether the moving velocity of the mobile node is higher than a predetermined moving velocity threshold. In case the moving velocity is higher than the predetermined moving velocity threshold, the processor is further adapted to generate a determination notification for the network access entity, comprising information on the determination. A transmitter is adapted to transmit the determination notification to the network access entity.

According to the invention, a control entity for controlling system resources in a first reception area within a routing area is provided. The control entity is connected to a routing entity, that provides connectivity to the first reception area and is connected to a network access entity. The network access entity routes date into the routing area. The mobile node is located within the first reception area and moves with a moving velocity from the first reception area towards a second reception area. A processor is adapted to calculate the moving velocity of the mobile node and to generate a velocity notification message for the routing entity, including information on the calculated moving velocity of the mobile node. A transmitter is adapted to transmit the velocity notification message to the routing entity.

According to the invention, a network access entity for routing data into a routing area is provided. The network access entity is connected to a plurality of routing entities. A first routing entity of the plurality of routing entities provides connectivity to a first reception area within the routing area. A mobile node is located within the first reception area and moves with a moving velocity from the first reception area towards a second reception area. A receiver is adapted to receive a registration message of the mobile node, including address information on the mobile node. A transmitter is adapted to forward data to the first routing entity. The receiver is further adapted to receive a determination notification for the mobile node. Upon receiving the determination notification for the mobile node, the transmitter is further adapted to forward data to the plurality of routing entities.

### BRIEF DESCRIPTION OF THE FIGURES

In the following the invention is described in more detail in reference to the attached figures and drawings. Similar or corresponding details in the figures are marked with the same reference numerals.
- Fig. 1: shows a mobile communication system according to one embodiment of the invention,
- Fig. 2: shows an IP communication system according to one embodiment of the invention,
- Fig. 3: shows a signalling chart for the transmission of data according to one embodiment of the invention, and
- Fig. 4: shows sequence chart for the transmission of data according to one embodiment of the invention.

### DETAILED DESCRIPTION OF THE INVENTION

The following paragraphs will describe various embodiments of the invention. For exemplary purposes only, most of the embodiments are outlined in relation to an IPv6 communication system and the terminology used in the subsequent sections mainly relates to the IPv6 terminology. However, the terminology and the description of the embodiments with respect to an IPv6 architecture is not intended to limit the principles and ideas of the inventions to such systems.

Also the detailed explanations given in the Technical Background section above are merely intended to better understand the mostly IPv6 specific exemplary embodiments described in the following and should not be understood as limiting the invention to the described specific implementations of processes and functions in the mobile communication network.

According to the invention, a routing area may be defined as an area to which data is routed by a network access entity and in which a MN is able to receive data. The network access entity may logically divide its entire routing area into several logical routing areas. Routing entities connected to the network access entity may subsequently be arbitrarily assigned to each logical routing area.

According to the invention, a network-layer handover may be defined as a process in which a mobile node changes its network attachment point at the IP layer level. At network layer level, an IP address of a mobile node identifies the MN and its location or attachment point to an IP network. For example, a mobile node may be handed over from one router or switch to another. As a result, when an IP terminal moves to a new attachment point to the IP network, it will have to use a new IP address to receive packets from the new network attachment point. When this happens, other entities in the network need to be notified about the new IP address of the MN so that the data packets are appropriately routed to the new attachment point to the IP network.

According to the invention, a link-layer handover may be defined as the mechanism by which an ongoing connection between a mobile node and a correspondent node is transferred from one point of access to the fixed network to another. Said handover is also known as handoff. In other words, the MN changes its association to a different point of access but its identifier at network-layer level does not change. For example, in cellular voice telephony and mobile data networks, such points of attachment are referred to as base stations (NodeB in UMTS) and in wireless LANs (WLANs), they are called access points (APs). In either case, such a point of attachment serves a coverage area called a cell. Handoff, in the case of cellular telephony, involves the transfer of a voice call from one NodeB to another. In the case of WLANs, it involves transferring the connection from one AP to another. In addition when the MN moves and executes an HO from one point of attachment to another, the old serving point of attachment may be informed about the change. This is usually called dissociation. The MN may also reassociate itself with the new point of access to the fixed network.

According to the invention, a determination notification may be defined as a message including information about how the velocity threshold was crossed by the moving velocity of the mobile node. This includes both crossing directions, in particular if the velocity rises above the threshold or if the velocity drops below the threshold. Furthermore, the determination notification may include information about the mobile node, like for example address information or location information.

According to the invention, an assignment of a multicast address to the mobile node, may be defined as a binding of the multicast address to an address, permanent or variable, of the mobile node, wherein the binding is used to map data packets, that are destined to the multicast address to the address of the mobile node.

According to the invention, a router solicitation message or an attachment solicitation message may be defined as a message to make the mobile node known to the network, Furthermore, depending on the implementation, the message may be used to assign an IP layer identifier to the mobile node or allow the mobile node to configure this identifier by itself. For example, in IPv4 ICMP Router Solicitation message is a message by a mobile node to a router to ask the router to send ICMP Router Advertisement messages. In IPv6 a mobile node can also proactively probe the network to see if there are reachable routers.

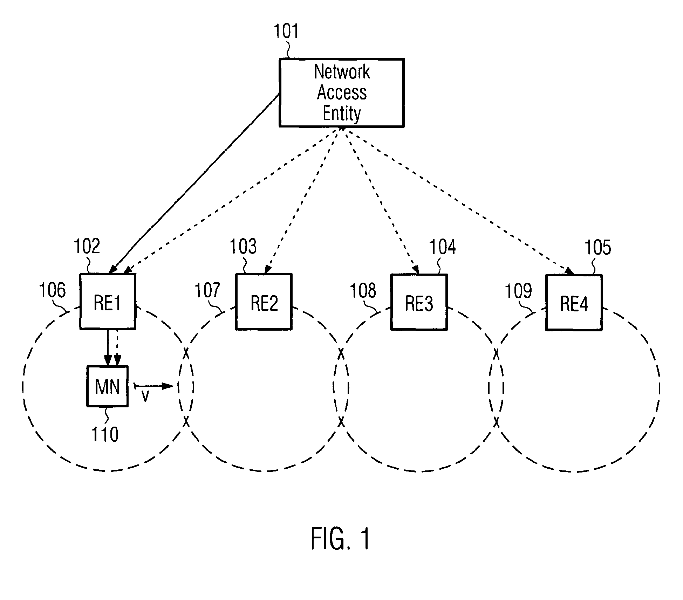

Fig. 1 shows a communication system according to one embodiment of the invention. A network access entity 101 provides an entry point into a sub-network. Within the sub-network, several routing entities (RE) 102, 103, 104, 105 are connected to the network access entity 101. The routing entities respectively provide connectivity to at least one reception area. More specifically, RE1 102 controls one first reception area 106, RE2 103 a second reception area 107, RE3 104 a third reception area 108 and RE4 105 controls a reception area 109. A mobile node 110 is currently located in the first reception area 106 and is moving with a velocity v within the reception area towards the second reception area 107.

The MN communicates for example with a corresponding node (CN) (not shown in Fig. 1). Usually, the network access entity forwards incoming data from the CN to the specific RE of the reception area, where the MN 110 is currently located. In this case, the network access entity forwards the incoming data, destined to MN 110 to the first routing entity RE1 102.

In cases where the MN is located in fast moving vehicles, like trains or cars, the MN 110 quickly changes between the reception areas. According to the invention, the moving velocity v of the mobile node 110 is continuously being calculated and in case the moving velocity surpasses a predetermined moving velocity threshold a different data transmission method is performed by the communication system. The predetermined moving velocity threshold may be set appropriately in advance, according to estimations based on, for example, system parameters in the reception area, size of the reception area, or a distance to the network access entity.

According to the invention, when a mobile node enters the routing area, which in this case is mainly composed of the four RE1-4, the MN may attach to the first RE1 102. Consequently, the RE1 102 notices the presence of a new mobile node, MN 110, and registers the mobile node 110 in the network access entity 101. As mentioned above, the moving velocity of the mobile node is calculated. As long as the moving velocity is below said velocity threshold, the mobile node is in a normal moving condition, and the data is transmitted from the network access entity to the current RE of the mobile node. The current RE then forwards the data via unicast to the MN. This is shown by the solid, continuous lines in Fig. 1.

As soon as said moving velocity is higher than the predetermined moving velocity threshold, the mobile node 110 changes its state to a fast moving condition, and the network access entity 101 is notified about this change. Subsequently, the network access entity 101 starts to transmit the data to all routing entities in the routing area, in this case to RE1-4. This may be done by utilizing a multicast address. The multicast address may be configured upon the above mentioned first registration of the mobile node 110 to the network access entity 101. By utilizing the multicast address, the data is multicasted from the network access entity to all REs in the routing area. Alternatively, the data may be transmitted to each routing entity in the routing area via unicast, utilizing a direct connection to each RE.

Subsequently, the data is received in the REs 1-4. The current RE, still RE1 then forwards the data to the mobile node 110. This is illustrated by the dashed lines in Fig. 1.

Independent from the moving velocity, the mobile node will eventually reach the end of the current reception area and enter a new reception area. Consequently, a handover has to be performed for the mobile node 110 between the current RE and the new RE. In this case, the MN 110 may leave the first reception area 106 and enter the second reception area 107. Usually, a handover comprises at first a link-layer handover and subsequently a network-layer handover.

According to the invention, if the moving velocity of the mobile node 110 is below the velocity threshold, both handovers, link-level and network-level, will have to be performed to maintain connectivity with the network access entity. Consequently, after a corresponding message from the mobile node to the network access entity 101, including address information of the new RE, the network access entity 101 will transmit data to the new RE, in this case RE2 103, of the mobile node. The RE2 103 will then forward the data to the mobile node 110.

If the mobile node 110 is in a fast moving state, the moving velocity being higher than the velocity threshold, as mentioned above, the new RE, here RE2, already has data for the mobile node. Hence, only a link-layer handover is necessary. The need for a network-layer handover is eliminated, because the network access entity transmits the data to all routers in the routing area and the data is already available at the RE. After the link-level handover, the awaiting und further received data is then immediately forwarded by the second routing entity RE2 103 to the mobile node 110.

Accordingly, if the moving velocity is currently higher than the velocity threshold and then drops below the velocity threshold, the current RE of the mobile node will transmit a determination notification to the network access entity, including information on this drop below the threshold. Upon receiving said notification, the network access entity will then switch to a usual unicast transmission to the current RE.

More specifically, the mobile is located in the second reception area 107, controlled by the second RE 103 and currently is in a fast moving condition, namely the MN 110 moves at a greater speed than defined by the threshold. In case the moving velocity falls below the threshold and hence the mobile node changes into a normal moving condition, the network access entity is notified about this change of condition. The network access entity then stops transmitting the data to all routing entities in the routing area. Instead, it will transmit the data solely to the current RE, RE2 103 of the mobile node. From the second RE2 the data is then forwarded to the mobile node.

Alternatively to the above described approach where the mobile node registers upon entering a new routing area, it is also possible to conduct the registration of the MN to the network access entity only when necessary.

More specifically, an interval or range of moving velocity is defined. Therefore, two moving velocity thresholds may be pre-determined, a low velocity threshold and a high velocity threshold. Accordingly, the mobile node may be in three conditions, a fast moving condition, wherein the moving velocity is higher than the high velocity threshold. The high velocity threshold is comparable to the previously used velocity threshold. If the mobile node is below the high velocity threshold, but higher than the low velocity threshold the condition may be termed pre-fast moving. In case the velocity drops below the low velocity threshold, and of course is also lower than the high velocity threshold, the mobile node is in a state of normal moving.

In this light, the low velocity threshold and the corresponding interval between the thresholds, are defined to indicate a probability of the mobile node to change its condition from normal moving to fast moving. The actual velocity difference between the velocity thresholds, and therefore the range of velocity in which a mobile node is probable to start moving fast, may be defined based on determined parameters of the communication system.

In case a normal moving mobile node, crosses the low velocity threshold, the mobile node is registered in the network access entity. This may include the configuration of a multicast address for the mobile node. In this pre-fast moving condition, it is important to set-up the network access entity for being able to switch to multicast for this mobile node, in case the MN changes to a fast moving condition.

Consequently, the moving velocity of the mobile node will be further monitored. If the moving velocity drops below the low velocity threshold no further action is necessary. However, if the mobile node changes to a fast moving state, namely, the velocity surpasses the high velocity threshold, the network access entity is notified about this change. Similar to the above described embodiment, the network access entity 101 then starts to transmit the data to all REs in the routing area. Consequently, only the current RE is able to further forward the data to the mobile node 110.

In both alternatives, it is further possible to conduct in parallel a usual handover procedure, when in a normal moving condition. This may include Router Solicitation messages, Router Advertisement messages, binding updates, Handover Initiate messages, etc. between the mobile node and the old and new routing entities.

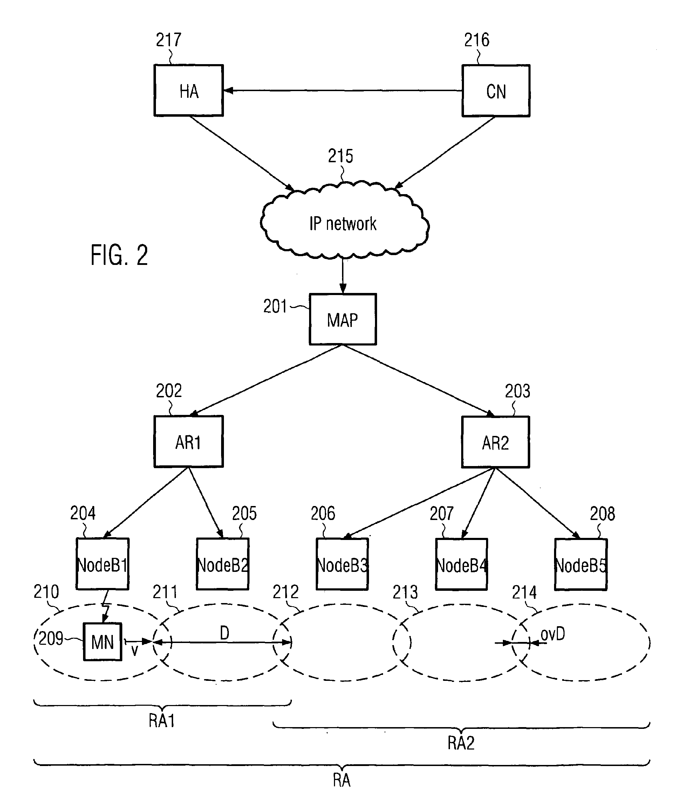

In Fig. 2 an IPv6 communication system is depicted, in which the invention and the embodiments of the invention may be implemented.

A Mobility Anchor Point (MAP) 201 serves as an entry point into a network and is hence comparable to the network access entity in Fig. 1. The MAP 201 routes data to the Access Routers (AR) to which it is connected. In Fig. 2 AR1 202 and AR2 203 are connected to the MAP 201. The AR may further be connected to control entities for controlling system resources in a reception area. A control entity may be for example a NodeB or an Access Point. AR1 202 is connected to two Node Bs, NodeB1 204 and NodeB2 205. Every NodeB provides connectivity to one reception area. NodeB1 204 controls the radio resources in reception area 210 and NodeB2 controls reception area 211.

Accordingly, in the system illustrated in Fig. 2, a second access router AR2 203 is connected to three NodeBs, NodeB3 206, NodeB4 207 and NodeB5 208, which respectively control system resources in three reception areas 212, 213, 214.

Depending on the implementation, the NodeBs and the Access Routers may be co-located in one single entity, like illustrated in Fig. 1, wherein just one RE is necessary to provided connectivity to the reception area. For the functioning of the invention both implementations are possible.

The mobile node 209 is located in the reception area 210, controlled by the first NodeB1 204. The mobile node 209 communicates with a corresponding node (CN) 216. The CN 216 may be located in the same sub-network as the mobile node or, as illustrated in Fig. 2 in a different network. If the CN is in another network, the data must be transmitted through an IP network 215, which is located between the MN 209 and the CN 216.

MlPv6 utilizes a so called Home Agent (HA), which represents the mobile node in the home network, when the mobile node is in a foreign network. Hence, if no route optimization is performed, the data may be transmitted from the CN 216 to the Home Agent 217 first and then forwarded to the mobile node, instead of being in direct contact with the MN 209.

It is also possible to define limited routing areas. Instead of having one routing area (RA) per MAP, a plurality of routing areas are configured for one MAP. Accordingly, specific access routers are then assigned to one routing area or another. For illustration purposes only, in Fig. 2 two routing areas, RA1 and RA2 are configured with respectively only one AR. Nevertheless, it is also possible to configure routing areas with an arbitrary number of ARs. The pre-configuration of routing areas and the corresponding assignment of ARs to each routing area may be conducted in the MAP 201 by an engineer. Accordingly, the MAP holds information on every existing routing area in its domain and on which ARs belong to each RA.

The following description will mainly be directed to the case in which only one routing area is present. Consequently, in Fig. 2 the RA is composed of AR1 202 and AR2 203. However, it is also possible to utilize multiple routing areas for one MAP. In this case, the invention would be limited to only one routing area. When entering a new routing area, a procedure will be initiated that is in concordance with the procedure of the previous routing area. However, it should be noted that said logical limitation of one large routing area into several smaller routing areas also does not restrict any embodiments of the invention.

As mentioned above, the mobile node 209 enters the routing area, defined by AR1 202 and AR2.

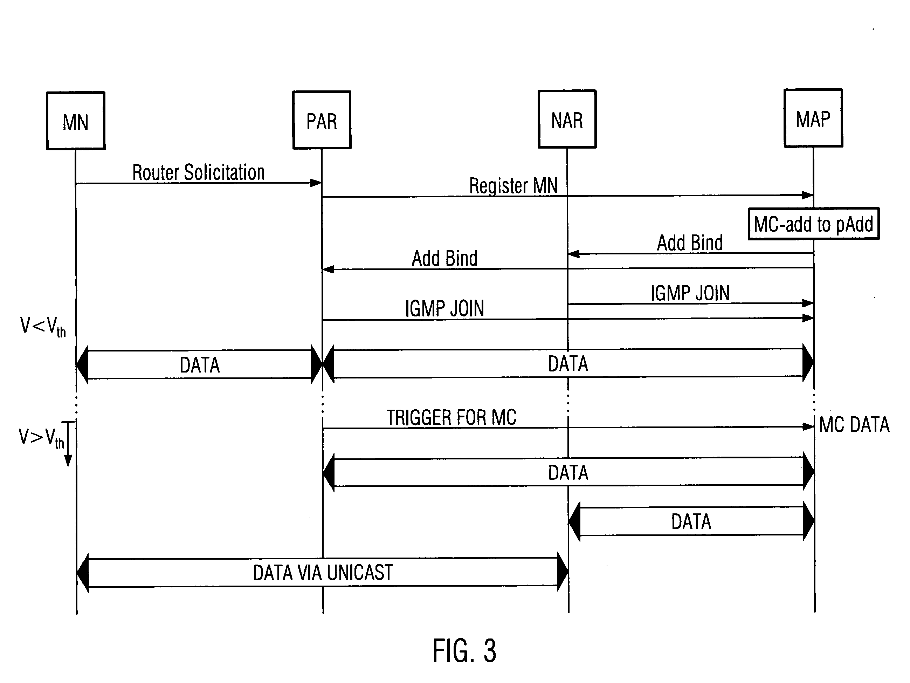

Fig. 3 shows a message sequence chart according to an embodiment of the invention. Upon entering the RA the MN 209 transmits a Router Solicitation (RS) message to the current Access Router, AR1 202. The RS message is sent to inform the AR1 about the presence of a new mobile node in its coverage area. Consequently, AR1 sends a registration message to the MAP 201, in order to register the mobile node 209 in the MAP 201. A permanent address is advantageously assigned to a mobile node, to unambiguously identify a MN. This permanent address may not change within a routing area, but may be different from one routing area to another routing area. In this case, upon the registration message from the AR1 202 to the MAP 201, the MAP 201 assigns an appropriate permanent address to the mobile node.

Alternatively, the permanent address may not change at all for a mobile node. Accordingly, the permanent address remains the same for all routing areas. In that case, the permanent address must be provided from the mobile node 209 to the MAP 201, because the MN is the only entity in possession of said permanent address. Consequently, an address notification may be sent from the MN to the MAP directly or via the AR1. A possible permanent address may be a permanent Care of Address (CoA), which may be assigned to the MN.

The use of a permanent address, that does not change at all is more advantageous, because the number of headers of the data packets needed are thereby reduced. According to known implementations, if a variable local address of the MN is utilized, this leads to IP on IP header encapsulation. The MN needs to change the local address every time the MN moves to another AR. If a permanent address is utilized, said permanent address must not be changed, if the MN moves into the coverage area of a new AR. Data packets that are directly transmitted from the mobile node to the CN, just have one header with the permanent address as the source address and the CN's address as the destination address.

In both above mentioned cases, the MAP 201 holds a permanent address of the mobile node. Upon registration of the MN 209 to the MAP 201, the MAP 201 further selects one multicast (MC) address from various available multicast addresses and assigns said multicast address to the permanent address of the MN.

Subsequently, the MAP 201 transmits AddBind messages to all ARs in the routing area. This also applies if logical routing areas are defined, because the MAP holds information about all RAs in its domain, and about the ARs in each domain. Hence, the MAP is enabled to transmit the AddBing messages to only those ARs in the routing area, in which the mobile node has registered.

The AddBind messages contain information about the assignment of the MC-address to the permanent address of the mobile node. The ARs in the routing area, in this case AR1 202 and AR2 203, receive the AddBind message and accordingly, bind the MC-address to the permanent address of the mobile node. Subsequently, each AR generates an IGMP Join message, which is then sent back to the MAP 201. This Join messages are transmitted to the MAP 201 in order to join the multicast group that is related to the received Multicast-address. In consequence, AR1 and AR2 send Join messages to the MAP 201 to be part of the multicast group for said multicast address assigned to the mobile node. However, the received Join messages are not necessary for the functioning of the invention, as the MAP already has pre-configured information on all ARs in the routing area. The AddBind messages are only sent to those ARs which are assigned to the routing area the MN registered to. Hence, the received Join messages from the ARS just confirm the pre-configured information on the ARs in the MAP. The multicast group for said MC-address may be configured also without the Join messages from the ARs.

The MAP and the ARs may include cache tables, in which the assignment of the MC-address to the permanent address of the MN 209 is bound.

It is also possible that a meshed network is between the ARs and the MAP 201. In this case, the IGMP Join messages furthermore define a path through the meshed network, which may then be used by the MAP to transmit data packets to the ARs.

Presumably, the MN 209 moves at the beginning with a velocity v that is below a predetermined moving velocity threshold. In this normal moving condition, no notification may be sent to the MAP 201, because the MN 209 did not change its condition. Consequently, the MAP 201 continues to transmit incoming data packets from the CN 216 or the HA 217, that are directed to the permanent address of the mobile node 209 to the current AR, AR1 202. In Fig. 3 the current AR is termed PAR, for Previous AR and a new AR is termed NAR.

The current AR then forwards the data packets to the MN 209 and the mobile node receives the data packets in a usual way.

The moving velocity of the mobile node may be calculated in the MN 209 or in the NodeB, of the reception area in which the MN 209 is currently located, here NodeB1 204. The determination whether the velocity v is higher than a threshold however may be conducted in different network entities.

At first, it is possible to calculate the velocity and decide whether the velocity is higher than a threshold in the MN 209. In this case, the MN 209 transmits a determination message either directly or via the current AR, to the MAP 201, wherein the determination message includes information about the speed and moving condition of the MN. This message may only be sent if a change of condition occurs.

A second possibility is that the MN 209 calculates the velocity v and transmits a velocity notification message either to the NodeB1 204 or to the AR1 202. The NodeB1 and the AR1 must then hold the velocity threshold and must determine if the velocity v surpasses or drops below said threshold. Furthermore, the NodeB1 or the AR1 may then transmit a determination message to the MAP 201 to inform about a change of condition.

It is also applicable that the NodeB1 calculates the speed of the MN 209. In this case the NodeB1 may further be enabled to determine if the calculated speed of the MN 209 is higher or below a set threshold. Accordingly, the NodeB would then send a determination message to the MAP 201 directly or via the AR, including information on the determination.

Alternatively, the NodeB may only transmit a velocity notification to the AR and the AR then determines if the velocity passes over a pre-determined velocity threshold. The current AR would then send a determination message to the MAP, including speed and condition change information.

It is further possible to transmit, either from the mobile node or from the NodeB1 a velocity notification directly to the MAP 201. In this case, the MAP would then decide if the received velocity trespasses a threshold.

Important in the just mentioned alternatives is that the MAP is provided with information about the velocity of a mobile node, and if a velocity threshold is crossed.

Presumably, the MN 209 eventually accelerates and moves with a velocity that is beyond the set threshold. In Fig. 3 the alternative is illustrated in which the current router determines that the velocity v is now higher than the threshold and accordingly transmits a determination message to trigger the multicast transmission for the MN 209.

The MAP 201 receives the determination notification and starts to transmit incoming data, destined to the permanent address of the mobile node to all ARs in the routing area, according to the illustrated system, in this case only to PAR (AR1) and to NAR (AR2). The previously configured MC-address assigned to the mobile node may be used to transmit data to all ARs in the multicast group of said MC-address. Only those ARs which were previously provided with the AddBind messages did send a Join message to join the multicast group.

This correspondingly applies also if several routing areas are present. The MN 209 registers to the RA1 of the current router AR1 and subsequently the MAP 201 sends AddBind messages only to those ARs that are included in the logical RA1. Accordingly, the MAP 201 only multicasts data packets to AR in the multicast group, thereby providing only data to the ARs in the RA, to which the MN has previously registered.

As mentioned above, the data is transmitted to all ARs in the routing area. However, only the current AR of the MN can forward the data to the mobile node. In this case the data is received in AR1 202 and AR2 203, however only AR1 202 forwards the data to the MN 209 (not shown in Fig. 3). In this regard, it may also be mentioned that the data may also be multicasted to all NodeBs under control of one AR. Subsequently, the data is transmitted from the NodeB via unicast to the MN 209. It is also possible to transmit the data via multicast from the NodeB to the MN 209, however to save radio resources in the radio cell 210 it is advantageous to transmit the data, in the last hop from NodeB1 204 to the MN 209 via a point-to-point connection.

It is further possible to transmit the data from the AR1 only to the current NodeB of the MN, here only to NodeB1. The NodeB1 204 would then forward the data via a wireless link to the mobile node 209.

The moving mobile node will presumably leave the first reception area 210 and move to another reception area 211, which is under control of NodeB2. However, the serving AR remains the same, namely AR1 202. In this case it is necessary to perform an inter-NodeB handover. Thereby, the attachment on the link-layer is changed from NodeB1 204 to NodeB2 205. No network-layer handover is necessary for the mobile node, as the AR doesn't change. This applies to both moving conditions of the mobile node. Regardless of the moving velocity, a link-level handover is conducted after which the NodeB2 receives the data from AR1 and forwards it to the mobile node 209, now in its radio cell 211.

Eventually, the MN 209 will leave the coverage area of the current AR and enter a reception area which is under control of a new AR. In Fig. 2, the MN 209, now in radio cell 211 (not shown), leaves the reception area 211 and enters a new reception area 212. The new reception area 212 is under control of NodeB3 206, that is connected to the new AR2. Both ARs, AR1 and AR2, belong to the same routing area, to which the mobile node has registered in the beginning. It is not important if the MAP controls only one large routing area or if small logical routing areas are defined. It is rather of importance that the change of AR for the mobile node occurs within one routing area, hence within one session.

According to an advantageous embodiment, the old AR1 202 may notify the MAP 201, about the departure of the mobile node from its coverage area. Accordingly, the AR2 would send, upon verifying that the MN is no longer reachable, an IGMP Leave message to the MN. Thereby, the AR would delete itself from the multicast group of the MC-address assigned to the mobile node. In other words, by sending the Leave message the old AR1 prunes itself from the multicast tree, that is formed by the multicast group.

Upon changing the AR of the mobile node within one routing area, first a link-level handover is conducted from the old NodeB2 205 to the new NodeB3 206. Thereby, depending on the implementation a CRNTI (Cell radio network temporary identifier) may be changed from an old CRNTI, corresponding to the old NodeB, to a new CRNTI, corresponding to the new NodeB. According to a different implementation, wherein the handover is conducted between Access Points (AP), upon changing the AR of the mobile node within one routing area, first a link-layer handover is performed from the old AP to the new AP. Thereby, a MAC-address (Media-Access-Control address) may be changed from an old MAC-address, corresponding to the old AP, to a new MAC-address, corresponding to the new AP.

The subsequent steps depend on the moving condition in which the mobile node entered the new reception area of the new AR.

In case the MN 209 is in a normal moving condition, meaning that the moving velocity v of the MN is below the predetermined threshold, the MAP 201 consequently still transmits data to the old AR1. Hence, the MAP must be informed about this change of AR and therefore a network-layer handover is necessary for the mobile node. This may usually include for example, Router Solicitation messages from the MN to the new AR2, Router Advertisements messages from the new AR2 to the mobile node in response to the RS message, Handover Initiate and Acknowledgment messages between the old AR1 and the new AR2. Depending on the implementation, the MAP may further be informed of the change of an IP-address of the mobile node, because due to new topology location, usually an IPv6 address changes.

After the link-layer and the network-layer handover, the data is transmitted from the MAP 201 to the new AR2 203, forwarded to the current NodeB3 206 and from there to the mobile node 209.

In case the MN 209 enters in a fast moving condition, namely the moving velocity v is higher than the threshold, data is already transmitted to all ARs in the routing area. Consequently, the new AR2 already has data packets destined to the mobile node waiting. Therefore, no network-layer handover is necessary. The MAP must not be informed about the new AR, because the MAP 201, regardless of the current location of the MN 209 transmits the incoming data packets, destined to the MN 209 to all ARs in the routing area. In this regard, it is to mention that the MAP may not be informed during the remaining session where the MN is located, and which AR is the current serving AR. The waiting data packets will then be forwarded from the current AR to the current NodeB and from there to the MN.

In case, several routing areas are present for one MAP, if the mobile node remains in a fast moving condition until the end of the routing area, the MAP has to be informed that the MN has left the routing area. This may for example be done, upon entering a new routing area. Upon entering a new routing area, the above described embodiments apply accordingly. In concordance with the previous embodiments, the MAP receives a registration message from the mobile node. The MAP then may notice that the mobile node is already registered to another routing area. Subsequently, the MAP de-registers the MN from the old RA and registers it to the new RA. The MAP then stops to transmit the data to all ARs of the old RA, and starts multicasting the data to all ARs of the new RA.

It is also possible, that the last NodeB of the routing area, upon verifying that the MN is no longer reachable, transmits a de-registration message to the MAP. Consequently, the MAP stops to transmit the data to the ARs of the RA and de-registers the MN.

According to the invention, a data transmission method is provided that enables a seamless communication for a fast moving mobile node. To accomplish this, the necessity for a network-layer handover is eliminated. Hence, there must be transmitted fewer messages and the necessary handover procedure is shortened. This is quite relevant, because the overlapping areas may become smaller as data rate projections increase. Therefore, the demand for efficient and short handover procedures may rise.

According to the invention it is also possible to register the MN 209 only shortly before the condition of the MN changes to a fast moving condition. As described above, two threshold are pre-determined. The MN 209 would only register to the routing area in case the velocity crosses a low velocity threshold. Subsequently, similar steps to the above mentioned embodiments would be performed. The MAP may then configure a multicast address and transmit AddBind messages to all ARs in a RA. Those ARs would then join the multicast group of the MC-address. Then if the mobile node crosses the high velocity threshold multicasting would be triggered in the MAPfor the MN. Accordingly, if the velocity falls below the high velocity threshold a usual unicast transmission mode would be notified to the MAP.

The moving velocity of a mobile node may be obtained or derived in several ways. For example the dwell time the MN has stayed in a cell together with the distance D from edge to edge of a radio cell may be used. Another possibility is to use propagation parameters to derive the speed of the MN. In this case, the propagation characteristics of the signal from the mobile node to the base station are used together with the attenuation parameters, that are constant in the area in which the base station is located, together with antenna gains and other gains and losses that depend on the transmission system that are utilised. This calculation is made over several consecutive packets, sent by the mobile node, the number of packets being determined by the geographical area conditions and attenuation and path losses parameters. By further applying the path losses principles, the distance of the mobile node to the base station can be calculated. This distance calculation, together with the time the packets are examined for this distance parameter can be used to determine the speed of the mobile node.

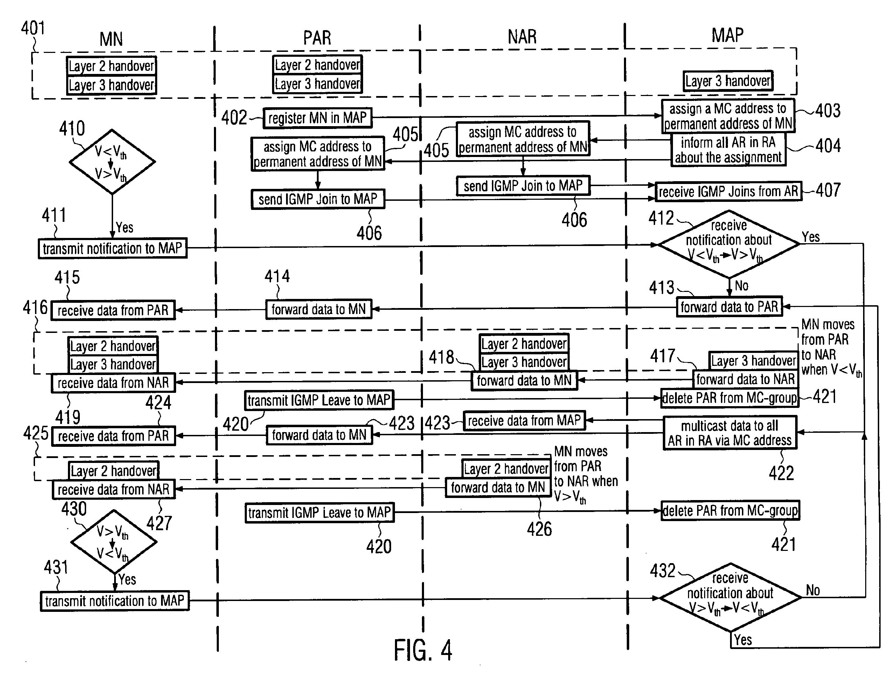

Fig. 4 shows a sequence chart for the transmission of data according to the invention. In Fig. 4 the registration is done at the beginning, immediately upon entering a new routing area. The other alternative to register the MN only when necessary, is not illustrated, however remains possible. Furthermore, it is assumed that the NodeB is co-located in the AR. However, the invention applies accordingly, if the NodeB is separated from the AR.

The mobile node enters a new AR in a routing area. Presumably, the MN is in a normal moving condition, hence a complete handover 401 is necessary. This includes a Layer 2 (link-level) handover and a Layer 3 (network-layer) handover for the MN. Furthermore, upon detecting the new mobile node, the current AR, PAR registers 402 the MN in the MAP. The MAP receives the notification to register the new MN and selects a MC-address. A permanent address may either be provided by the MN or alternatively, may be configured by the MAP for the MN for this session. The MAP assigns 403 the selected MC-address to the permanent address of the mobile node. Subsequently, MAP informs 404 every AR in the routing area about this mapping. All ARs in the RA receive the notification and thus internally assign 405 the MC-address to the permanent address of the mobile node. In response to the assignment notification, the ARs each send 406 an IGMP join message to the MAP in order to be included in the multicast group of the MC-address. The MAP receives 407 said IGMP Join messages from the ARs and includes the ARs in the multicast group of the previously configured MC-address.

During the whole time the moving velocity of the mobile node is calculated and monitored. In particular, if the moving velocity crosses a previously defined threshold. Hence, the MN may determine if the threshold is crossed. In this case, the MN checks if its moving condition changes from normal moving to fast moving. In other words, the MN checks 410 if the moving velocity exceeds the velocity threshold Vₜₕ.

In case the threshold is not exceeded the MN does not transmits a notification to the MAP. The MAP is waiting 412 for a notification from the MN. As no notification is received, the MAP continues to forward 413 incoming data, that is destined to the MN to the current AR of the MN, here PAR. The current AR, PAR then forwards 414 the data packets to the mobile node.

The MN presumably stays in a normal moving condition and reaches the end of the reception area, and enters a new reception area belonging to a new AR, NAR in the same routing area. In this case, also a usual complete handover 416 has to be performed. This includes a link-level (Layer 2) and a network-layer (Layer 3) handover. After the complete handover, the MAP has the necessary routing information to forward 417 the data to the new AR, NAR. The NAR then forwards 418 the data to the MN.

Advantageously, upon leaving the old AR, the PAR may transmit 420 an IGMP Leave message to the MAP, in order to prune itself from the multicast tree, that is defined by the multicast group. The MAP subsequently deletes 421 the PAR from the multicast group.

In case the threshold is exceeded, the MN transmits 411 a determination notification to the MAP including information on the change of condition. In this case, the MAP receives 412 the notification and then may start to multicast 422 the data to all AR in the routing area. The MAP utilizes the configured multicast address of the mobile node to multicast the data. Accordingly, every AR receives 423 the data. However, only the current AR, PAR is additionally able to forward 423 the data to the MN.

Again, it may be assumed that the MN remains in a fast moving condition and moves to the limit of the radio cell. Subsequently, the MN moves from the old radio cell to a new radio cell. In this case, only a link-level handover 425 is necessary to maintain connectivity to the CN, because the new AR, NAR already receives data destined to the MN. Consequently, the NAR is able to immediately forward 426 the received data to the MN.

Upon leaving the coverage area of the old AR, it is advantageous to transmit 420 an IGMP Leave message to the MAP for the PAR. Accordingly, the MAP receives the Leave message and deletes 421 the PAR from the multicast group related to the MC-address.

As mentioned above, the speed of the MN is monitored continuously, in this case by the MN itself. In case the speed is currently above the threshold and drops 430 below the threshold, a determination notification is transmitted 431 to the MAP. The notification includes location information about the MN, namely to which AR it is currently connected, because the MAP does not know where the MN is located during the multicast transmission. Correspondingly, the MAP is waiting 432 for a determination notification, this being similar to the step 412. However, the determination notification is opposite to the one sent in step 411. Accordingly, if the Map does not receive such determination message it continues to multicast 422 the data to all ARs in the RA, advantageously utilizing the MC-address. In case the MAP receives a determination message, indicating the change from fast moving condition to normal moving condition it starts forwarding the data only to the current AR, which may still be PAR instead of multicasting the data to all ARs in the RA.

All velocity threshold mentioned, may be pre-determined. However, it is also to adjust the velocity thresholds, to the current real-time conditions of the communication system.

The invention provides several further advantages. The multicast area may be constrained to routers in a limited RA, which may be defined by the network, hence no overflowing of un-necessary routeing and access areas. Furthermore, no wasteful use of air-link resources, since on the air-link the data traffic is unicast.

Furthermore, the number of signals over the air is reduced. There may be just one message from the MN to the AR, that is the attachment solicitation message used for registration at the beginning.

One further advantage may be that there is no unnecessary encapsulation over the air. Only one header may be used only.

Furthermore, the invention has only a low operational complexity. It suffices to provide setup or extend binding cache tables at the ARs and MAP. Furthermore, only one round trip message is exchanged between the AR and the MAP, namely a registration message.

Another embodiment of the invention relates to the implementation of the above described various embodiments using hardware and software. It is recognized that the various embodiments of the invention above may be implemented or performed using computing devices (processors), as for example general purpose processors, digital signal processors (DSP), application specific integrated circuits (ASIC), field programmable gate arrays (FPGA) or other programmable logic devices, etc. The various embodiments of the invention may also be performed or embodied by a combination of these devices.

Further, the various embodiments of the present invention may also be implemented by means of software modules which are executed by a processor or directly in hardware. Also a combination of software modules and a hardware implementation may be possible. The software modules or instructions may be stored on any kind of computer readable storage media, for example RAM, EPROM, EEPROM, flash memory, registers, hard disks, CD-ROM, DVD, etc.

## Claims

1. A method for transmitting data to a mobile node in a mobile communication system, wherein a network access entity routes data into a routing area, and wherein the network access entity is connected to at least two routing entities within the routing area, each of the at least two routing entities providing connectivity to at least one reception area within the routing area, wherein the mobile node enters the routing area and upon entering the routing area is located within a first reception area, which is controlled by a first routing entity, the mobile node moving with a moving.velocity from the first reception area towards a second reception area, which is controlled by a second routing entity, and the method comprises the steps of:
upon entering the routing area, registering the mobile node to the network access entity,
determining whether the moving velocity of the mobile node is higher than a predetermined moving velocity threshold,
in case the moving velocity is not higher than the predetermined moving velocity threshold, transmitting the data from the network access entity to the first routing entity and further transmitting the data from the first routing entity to the mobile node,
in case the moving velocity is higher than the predetermined moving velocity threshold, transmitting the data from the network access entity to each of the routing entities within the routing area and further transmitting the data from the first routing entity to the mobile node.

2. The method of claim 1, wherein the mobile node moves from the first reception area to the second reception area, the mobile node being located in the second reception area and the method further comprises the steps of:
in case the moving velocity is not higher than the predetermined moving velocity threshold, performing a network-layer handover between the mobile node and the second routing entity, and after the network-layer handover, transmitting the data from the network access entity to the second routing entity and from the second routing entity to the mobile node, and
in case the moving velocity is higher than the predetermined moving velocity threshold, performing a link-layer handover and after the link-layer handover, transmitting the data from the second routing entity to the mobile node.

3. The method of claim 2, further comprising the step of:
notifying the network access entity about the departure of the mobile node from the first reception area.

4. The method of one of claims 1-2, further comprising the step of :
calculating the moving velocity of the mobile node by the first routing entity or the mobile node.

5. The method of one of claims 1-3, wherein the step of determining whether the moving velocity is higher than the predetermined moving velocity threshold is effected by the first routing entity or by the mobile node.

6. The method of one of claims 1-5, further comprising the step of:
transmitting a determination notification from the mobile node or from the first routing entity to the network access entity, comprising information on the determination whether the moving velocity is higher or not higher than the predetermined moving velocity threshold.

7. The method of claim 6, wherein the determination notification further includes location information of the mobile node.

8. The method of one of claims 1-7, wherein the registering of the mobile node to the network access entity comprises an assignment of a multicast address to the mobile node.

9. The method of claim 8, wherein the network access entity is provided with pre-configured address information on the routing entities within the routing area, and a multicast group is formed for the multicast address assigned to the mobile node by utilizing said pre-configured address information on the routing entities within the routing area.

10. The method of claim 9, wherein the mobile node leaves the first reception area and upon leaving the first reception area, the first routing entity transmits a notification to the network access entity for excluding the address information of the first routing entity, controlling the first reception area, from the multicast group of the multicast address, assigned to the mobile node.

11. The method of claim 10, wherein in case the moving velocity is higher, the multicast address assigned for the mobile node is utilized for the transmission of data from the network access entity to the routing entities within the routing area.

12. The method of one of claims 1-11, wherein in case the moving velocity is higher than the moving velocity threshold, the data is transmitted to the routing entities within the routing area via a connection between the network access entity and each routing entity within the routing area.

13. The method of one of claims 1-12, wherein the network access entity is a mobility anchor point and wherein the routing entities are access routers.

14. The method of one of claims 1-13, wherein at least one control entity is connected to the each routing entity, each control entity controlling system resources in a reception area within the routing area, and wherein the data is transmitted from the first routing entity to a first control entity and from the first control entity to the mobile node via unicast.

15. The method of claim 14, wherein the moving velocity is calculated by the control entity.

16. The method of one of claims 14-15, wherein the step of determining whether the calculated moving velocity is higher than the predetermined moving velocity threshold is effected by the control entity.

17. The method of one of claims 14-16, further comprising the step of:
transmitting a notification from the control entity to the network access entity, comprising information on the determination whether the moving velocity is higher than the predetermined moving velocity threshold.

18. The method of one of claims 14-17, wherein the data is transmitted from the first control entity to the mobile node on a wireless connection via unicast.

19. The method of claim 8, further comprising the step of:
upon entering the routing area, assigning a permanent address to the mobile node, and
wherein the assignment of the multicast address to the mobile node, is effected by assigning the multicast address to the permanent address of the mobile node.

20. The method of claim 8, further comprising the step of:
upon entering the routing area, notifying the network access entity by the mobile node about a permanent address of the mobile node, and wherein the assignment of the multicast address to the mobile node, is effected by assigning the multicast address to the permanent address of the mobile node.

21. The method of one of claims 19-20, further comprising the step of:
upon registering the mobile node to the network access entity, notifying the routing entities within the routing area about the assignment of the multicast address to the permanent address of the mobile node.

22. The method of one of claims 1-21, wherein an intermediate network is located between the network access entity and the routing entities within the routing area, and the method further comprises the steps of:
transmitting from each routing entity within the routing area an Internet Group Management Protocol Join message to the network access entity, for defining a path for the transmission of the data from the network access entity through the intermediate network to the each routing entity.

23. The method of one of claims 1-22, wherein the moving velocity of the mobile node is calculated by utilizing a dwell time of the mobile node in a reception area and a size of the reception area.

24. The method of one of claims 1-23, wherein the routing area is a first routing area of a plurality of routing areas and the network access entity routes data into the plurality of routing areas, and wherein the registration of the mobile node to the network access entity registers the mobile node solely for the first routing area.

25. A mobile node for communicating with a network via a routing entity, wherein the routing entity is connected to a network access entity, the network access entity routes data into a routing area, wherein the routing entity provides connectivity to a first reception area within the routing area and the mobile node is located within the first reception area and moves with a moving velocity from the first reception area towards a second reception area, and the mobile node comprises:
a processor is adapted to calculate the moving velocity of the mobile node, and is further adapted to generate a velocity notification message for the routing entity, including information on the calculated moving velocity of the mobile node,
a transmitter adapted to transmit the velocity notification message to the routing entity.

26. The mobile node of claim 25, wherein a control entity is connected between the routing entity and the mobile node, the control entity controlling system resources of the first reception area and the transmitter is further adapted to transmit the velocity notification message to the control entity.

27. The mobile node of one of claims 25-26, wherein the processor is further adapted to generate an attachment solicitation notification for the routing entity, and
the transmitter is further adapted to transmit the attachment solicitation notification to the routing entity.

28. The mobile node of one of claims 25-27, wherein the processor is further adapted to determine whether the calculated moving velocity of the mobile node is higher than a predetermined moving velocity threshold,
in case the moving velocity is higher than the predetermined moving velocity threshold, the processor is adapted to generate a determination notification for the network access entity, comprising information on the determination, and
the transmitter is further adapted to transmit the determination notification to the network access entity.

29. A routing entity for exchanging data with a mobile node in a routing area, the routing entity being connected to a network access entity, the network access entity routing data into the routing area, wherein the routing entity provides connectivity to a first reception area within the routing area and the mobile node is located within the first reception area and moves with a moving velocity from the first reception area towards a second reception area, and the routing entity comprises:
a receiver adapted to receive a velocity notification message from the mobile node, the velocity notification message including information on the moving velocity of the mobile node,
a processor adapted to determine whether the moving velocity of the mobile node is higher than a predetermined moving velocity threshold,
in case the moving velocity is higher than the predetermined moving velocity threshold, the processor is further adapted to generate a determination notification for the network access entity, comprising information on the determination, and
a transmitter adapted to transmit the determination notification to the network access entity.

30. The routing entity of claim 29, wherein the processor is adapted to generate, upon an attachment of the mobile node to the routing entity, a registration message for the network access entity, comprising information on the mobile node, and
the transmitter is further adapted to transmit the registration message to the network access entity.

31. The routing entity of one of claims 29-30, the routing entity further comprising:
a receiver adapted to receive a binding message from the network access entity, including information on an assignment of a multicast address to the mobile node, and
the processor is further adapted to process the binding message from the network access entity, and adapted to assign the multicast address to the mobile node.

32. The routing entity of one of claims 29-31, wherein the mobile node leaves the first reception area, and
the processor is adapted to generate a leave notification for the network access entity, including information on the departure of the mobile node from the first reception area and information on the departure of the mobile node from the routing entity.

33. A control entity for controlling system resources in a first reception area within a routing area, wherein the control entity is connected to a routing entity, the routing entity providing connectivity to the first reception area and being connected to a network access entity, the network access entity routing date into the routing area, wherein the mobile node is located within the first reception area and moves with a moving velocity from the first reception area towards a second reception area, and the control entity comprises:
a processor adapted to calculate the moving velocity of the mobile node, and adapted to generate a velocity notification message for the routing entity, including information on the calculated moving velocity of the mobile node, a transmitter adapted to transmit the velocity notification message to the routing entity.

34. The control entity of claim 33, further comprising a receiver adapted to receive a second velocity notification message from the mobile node, including information on the calculated moving velocity of the mobile node and the transmitter is further adapted to transmit the second velocity notification message to the routing entity or to the network access entity.

35. The control entity of claim 34, wherein the processor is further adapted to determine whether the calculated moving velocity of the mobile node is higher than a predetermined moving velocity threshold,
in case the moving velocity is higher than the predetermined moving velocity threshold, the processor is further adapted to generate a determination notification for the network access entity, comprising information on the determination, and
the transmitter is further adapted to transmit the determination notification to the network access entity.

36. A network access entity for routing data into a routing area, the network access entity being connected to a plurality of routing entities, a first routing entity of the plurality of routing entities, providing connectivity to a first reception area within the routing area, wherein a mobile node is located within the first reception area and moves with a moving velocity from the first reception area towards a second reception area, and the network access entity comprises:
a receiver adapted to receive a registration message of the mobile node, including address information on the mobile node,
a transmitter adapted to forward data to the first routing entity,
the receiver further adapted to receive a determination notification for the mobile node, and
upon receiving the determination notification for the mobile node, the transmitter is further adapted to forward data to the plurality of routing entities.

37. The network access entity of claim 36, wherein upon receiving the registration message of the mobile node, a processor is adapted to assign a multicast address to the mobile node,
the processor is further adapted to generate a binding message for each of the plurality of routing entities, comprising information on the assignment of the multicast address to the mobile node, and
the transmitter is further adapted to transmit the binding message to each of the plurality of routing entities.

38. The network access entity of one of claims 36-37, wherein the receiver is further adapted to receive a velocity notification, including information on the calculated moving velocity of the mobile node, and
a processor is further adapted to determine whether the calculated moving velocity of the mobile node is higher than a predetermined moving velocity threshold.

39. A method for transmitting data to a mobile node in a mobile communication system, wherein a network access entity routes data into a routing area, and wherein the network access entity is connected to at least two routing entities within the routing area, each of the at least two routing entities providing connectivity to at least one reception area within the routing area, wherein the mobile node enters the routing area and upon entering the routing area is located within a first reception area, which is controlled by a first routing entity, the mobile node moving with a moving velocity from the first reception area towards a second reception area, which is controlled by a second routing entity, and the method comprises the steps of:
determining whether the moving velocity of the mobile node is within an interval between a predetermined low moving velocity threshold and between a predetermined high moving velocity threshold,
in case the moving velocity is within the interval, registering the mobile node to the network access entity,
determining whether the moving velocity of the mobile node is higher than the predetermined high moving velocity threshold,
in case the moving velocity is not higher than the predetermined high moving velocity threshold, transmitting the data from the network access entity to the first routing entity and further transmitting the data from the first routing entity to the mobile node,
in case the moving velocity is higher than the predetermined high moving velocity threshold, transmitting the data from the network access entity to each of the routing entities within the routing area and further transmitting the data from the first routing entity to the mobile node.

40. A method for transmitting data to a mobile node in a mobile communication system, wherein a network access entity routes data into a routing area, and wherein the mobile node is located in a first reception area within the routing area, which is controlled by a first routing entity, the mobile node moving with a moving velocity from the first reception area towards a second reception area within the routing area, and the method comprises the steps of:
determining whether the moving velocity of the mobile node is higher than a predetermined moving velocity threshold,
in case the moving velocity is not higher, transmitting the data from the network access entity to the first routing entity and further transmitting the data from the first routing entity to the mobile node,
in case the moving velocity is higher, transmitting the data from the network access entity to each routing entity and further transmitting the data from the first routing entity to the mobile node.
